(19) Europäisches Patentamt
European Patent Office
Office européen des brevets

(11) **EP 2 025 401 B1**

(12) **EUROPEAN PATENT SPECIFICATION**

(45) Date of publication and mention
of the grant of the patent:
**31.10.2018 Bulletin 2018/44**

(51) Int Cl.:
*B01J 29/76* (2006.01)  *B01D 53/94* (2006.01)
*B01J 29/46* (2006.01)  *B01J 29/70* (2006.01)
*B01J 29/78* (2006.01)  *B01J 35/04* (2006.01)
*F01N 3/04* (2006.01)  *F01N 3/08* (2006.01)
*F01N 3/28* (2006.01)  *F01N 3/36* (2006.01)

(21) Application number: **07743570.9**

(22) Date of filing: **17.05.2007**

(86) International application number:
**PCT/JP2007/060135**

(87) International publication number:
**WO 2007/138874 (06.12.2007 Gazette 2007/49)**

(54) **NOx REDUCTION CATALYST, NOx REDUCTION CATALYST SYSTEM, AND METHOD FOR REDUCING NOx**

NOX-REDUKTIONSKATALYSATOR, NOX-REDUKTIONSKATALYSATORSYSTEM UND VERFAHREN ZUR REDUKTION VON NOX

CATALYSEUR DE RÉDUCTION DES NOx, SYSTÈME CATALYSEUR DE RÉDUCTION DES NOx, ET PROCÉDÉ DE RÉDUCTION DES NOx

(84) Designated Contracting States:
**DE FR GB**

(30) Priority: **29.05.2006 JP 2006148800**

(43) Date of publication of application:
**18.02.2009 Bulletin 2009/08**

(73) Proprietor: **Cataler Corporation
Shizuoka 437-1492 (JP)**

(72) Inventors:
• **YAMASHITA, Yoshinori
Kakegawa-shi, Shizuoka 437-1492 (JP)**
• **AONO, Norihiko
Kakegawa-shi, Shizuoka 437-1492 (JP)**

• **MURAI, Toshimi
Kakegawa-shi, Shizuoka 437-1492 (JP)**

(74) Representative: **Goddar, Heinz J.
Boehmert & Boehmert
Anwaltspartnerschaft mbB
Pettenkoferstrasse 22
80336 München (DE)**

(56) References cited:
WO-A1-2004/002611   WO-A1-2004/076829
WO-A1-2005/099873   JP-A- 05 049 931
JP-A- 10 296 085   JP-A- 2003 038 937
JP-A- 2006 110 485   US-A- 5 676 912

**Description**

TECHNICAL FIELD

The present invention relates to a NOx reduction catalyst, a NOx reduction catalyst system, and a NOx reduction method that reduce nitrogen oxides contained in the exhaust gas of an automobile and the flue gas of a power plant.

BACKGROUND ART

Exhaust gas of an automobile and flue gas of power plant contain harmful nitrogen oxides (NOx). A catalyst has been developed which selectively reduces these NOx (hereinafter, referred to as a SCR catalyst). For example, there is a disclosure of a technique that reduces NOx contained in the exhaust gas of a diesel engine to $N_2$ using a SCR catalyst including β-type zeolite ion-exchanged by ferrum and lanthanum (see Patent Literature 1).
Patent Literature 1: Unexamined Japanese Patent Publication No. 2005-177570
US 5,676,912 A discloses a process for exhaust gas NOx, CO, and hydrocarbon removal.
WO 2005/099873 discloses a process for the removal of harmful substances from exhaust gases of combustion engines and catalysts for carrying out said process.
JP 2003-038937 A discloses a method for catalytically reducing nitrogen oxides and catalysts thereof.
JP 10-296085 A discloses an exhaust gas purifying catalyst.
WO 2004/076829 A1 discloses an exhaust gas purification system for the selective catalytic reduction of nitrogen oxides in the lean exhaust gas of internal combustion engines and a method of exhaust gas purification.
JP 2006-110485 A discloses an exhaust gas catalyst and an exhaust gas treatment apparatus using the catalyst. JPH 05-49931 A discloses a catalyst for catalytic reduction of nitrogen oxide.
WO 2004/002611 A1 discloses a doped ceria-containing zeolite-based $NH_3$ SCR catalysts.

DISCLOSURE OF THE INVENTION

PROBLEMS TO BE SOLVED BY THE INVENTION

However, NOx reduction performance of a conventional SCR catalyst has been drastically lowered at a low temperature of 200°C or below. Thus, there is a problem that the conventional SCR catalyst is unable to sufficiently reduce NOx in low-temperature processing gas like the exhaust gas of a diesel engine.
The present invention has been made in view of the above points. One object of the present invention is to provide a NOx reduction catalyst, a NOx reduction catalyst system, and a NOx reduction method that exhibit high NOx processing performance even at low temperature.

MEANS TO SOLVE THE PROBLEMS

The above problems are solved in accordance with the subject-matter of the independent caims. Preferred embodiments result from the sub-claims.

(1) The invention according to claim 1 provides a NOx reduction catalyst system comprising: a NOx reduction catalyst that reduces NOx in processing gas, comprising: a catalyst substrate containing an oxide; a NOx absorption component; and a NOx purification component, and the NOx absorption component is Ba, the NOx purification component is one or more of those selected from a group consisting of V, Ce and La, and the oxide is in combination γ-$Al_2O_3$ and zeolite β; and an ammonia source addition device that adds an ammonia source to the processing gas supplied to the NOx reduction catalyst.
The NOx reduction catalyst of the present invention absorbs NOx by the NOx absorption component in a low temperature range (at 200°C or below, for example). In a higher temperature range (above 200°C, for example), the NOx absorption component releases the absorbed NOx. The released NOx is reduced by the NOx purification component activated under high temperature. The NOx purification component activated under high temperature reduces not only the NOx absorbed by the NOx absorption component but also the NOx in processing gas which newly flows in. Accordingly, the NOx reduction catalyst of the present invention can purify NOx over a wide temperature range from low to high temperature, and is highly useful.
Examples of the processing gas are an exhaust gas emitted from an engine (for example, gasoline engine, diesel engine, and others) of an automobile and a flue gas of a power plant.
The NOx absorption component broadly corresponds to a component that has NOx absorption properties. A mixing amount of the NOx absorption component is preferably in a range of 0.05 to 2 mol/L.

The NOx purification component broadly corresponds to a component that can generate nitrogen and water from NOx and ammonia. A mixing amount of the NOx absorption component is preferably in a range of 0.1 to 3 mol/L. A mixing ratio of the amount (weight ratio) of the NOx absorption component to the NOx purification component is preferably in a range of 1:0.5 to 20, more preferably 1:1 to 15. The NOx reduction catalyst of the present invention may contain the NOx absorption component and the NOx purification component in a mixed state in the whole or a part of the catalyst. Alternatively, the NOx reduction catalyst may include a part where the NOx absorption component is unevenly distributed and a part where the NOx purification component is unevenly distributed, respectively. The part where the NOx absorption component is unevenly distributed is a part where a concentration of the NOx absorption component is high as compared to the other region, more preferably a part which contains substantially all the NOx absorption component. It is preferable that the part where the NOx absorption component is unevenly distributed contains substantially no NOx purification component. The part where the NOx purification component is unevenly distributed is a part where a concentration of the NOx purification component is high as compared to the other region, more preferably a part which contains substantially all the NOx purification component. It is preferable that the part where the NOx purification component is unevenly distributed contains substantially no NOx absorption component.

The NOx reduction catalyst of the present invention may contain noble metal (for example, Pt, Rh, Pd, Ru, Ir, Au, Ag, and others) as other component. A mixing amount of noble metal is preferably in a range of 0.1 to 3.0 g/L. Mixing of 0.1 g/L or more of noble metal is highly effective in purifying harmful components (e.g., HC and CO) other than NOx in processing gas. Mixing of 3.0 g/L or less of noble metal does not block the effects of the NOx absorption component and the NOx purification component.

Noble metal can be mixed, for example, with the NOx absorption component, the NOx purification component, or the both. Noble metal may be mixed into a part where neither the NOx absorption component nor the NOx purification component substantially exists. In this case, the part including noble metal may be positioned downstream of the part containing the NOx absorption component and the NOx purification component, in a flowing direction of processing gas, for example.

(2) The invention according to claim 2 provides the NOx reduction catalyst as set forth in claim 1 that has a layered structure including an A-layer where the NOx absorption component is unevenly distributed and a B-layer where the NOx purification component is unevenly distributed.

The NOx reduction catalyst of the present invention absorbs NOx through the A-layer where the NOx absorption component is unevenly distributed at low temperature. The NOx reduction catalyst releases NOx from the A-layer at high temperature. The released NOx is led to and reduced in the B-layer where the NOx purification component is unevenly distributed.

Regarding the positional relationship between the A-layer and the B-layer, either of a structure is acceptable in which the A-layer is an upper layer and the B-layer is a lower layer, or a structure in which the A-layer is a lower layer and the B-layer is an upper layer. The more preferable structure has the A-layer as a lower layer and the B-layer as an upper layer. In this case, NOx released after absorbed once by the lower A-layer (the layer where the NOx absorption component is unevenly distributed) inevitably passes the upper B-layer (the layer where the NOx purification component is unevenly distributed) to be purified in the B layer. Accordingly, the NOx purification performance is further high.

The meaning that the NOx absorption component is unevenly distributed is that, for example, a concentration of the NOx absorption component in the A-layer is higher than a concentration thereof in part other than the A-layer. It is preferable that the NOx absorption component essentially exists only in the A-layer and that no NOx purification component essentially exists in the A-layer. The meaning that the NOx purification component is unevenly distributed is that, for example, a concentration of the NOx purification component in the B-layer is higher than a concentration thereof in part other than the B-layer. It is preferable that the NOx purification component essentially exists only in the B-layer and that no NOx absorption component essentially exists in the B-layer.

The layered structure may be a two-layer structure including the A-layer and the B-layer. Alternatively, the layered structure may include other layer(s) between the A-layer and the B-layer, on top of or under the both A-layer and B-layer. A thickness of the A-layer is preferably in a range of 1 to 150 $\mu$m. A thickness of the B-layer is preferably in a range of 1 to 150 $\mu$m. A ratio of layer thickness of the A-layer to the B-layer is preferably in a range of 1:1 to 10.

(3) The invention according to claim 3 provides the NOx reduction catalyst as set forth in claim 1 that has a structure in which an upstream portion where the NOx absorption component is unevenly distributed and a downstream portion where the NOx purification component is unevenly distributed are disposed in series along a flowing direction of the processing gas.

The NOx reduction catalyst of the present invention absorbs NOx through the upstream portion where the NOx absorption component is unevenly distributed at low temperature, and releases NOx from the upstream portion at high temperature. The released NOx is led to and reduced in the downstream portion where the NOx purification component is unevenly distributed. That is, in the NOx reduction catalyst of the present invention, NOx released after absorbed once by the upstream portion can be passed through the downstream portion where the NOx purification component is unevenly distributed. Accordingly, the NOx purification performance is further high.

The meaning that the NOx absorption component is unevenly distributed is that, for example, a concentration of the NOx absorption component in the upstream portion is higher than a concentration thereof in part other than the upstream portion. It is preferable that the NOx absorption component essentially exists only in the upstream portion and that no NOx purification component essentially exists in the upstream portion. The meaning that the NOx purification component is unevenly distributed is that, for example, a concentration of the NOx purification component in the downstream portion is higher than a concentration thereof in part other than the downstream portion. It is preferable that the NOx purification component essentially exists only in the downstream portion and that no NOx absorption component essentially exists in the downstream portion.

The NOx reduction catalyst of the present invention may include only the upstream portion and the downstream portion. Alternatively, the NOx reduction catalyst may include other portion(s) on the upstream side of the upstream portion, between the upstream portion and the downstream portion, or on the downstream side of the downstream portion.

A ratio of the length of the upstream portion to the downstream portion is preferably in a range of 1:0.1 to 10.

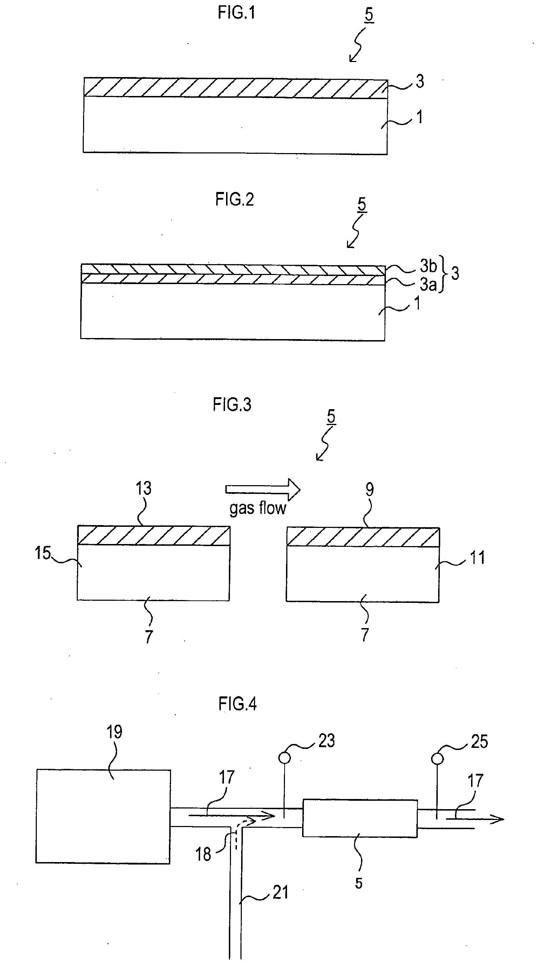

In the NOx reduction catalyst of the present invention, the downstream portion 11 and the upstream portion 15 may be separate bodies in which a catalyst layer 9 of a downstream portion 11 and a catalyst layer 13 of an upstream portion 15 are respectively formed on separate substrates 7, as shown in FIG. 3, for example. Alternatively, in the NOx reduction catalyst of the present invention, an upstream portion and a downstream portion may be formed on a partitioned surface of a single substrate.

(4) The invention according to claim 4 provides the NOx reduction catalyst as set forth in one of claims 1 to 3, wherein a weight ratio of the NOx absorption component to the NOx purification component in the entire NOx reduction catalyst is in a range of 1:0.1 to 20.

In the NOx reduction catalyst of the present invention, the weight ratio of the NOx purification component to the NOx absorption component is 0.1 or above (more preferably, 0.5 or above). Accordingly, excessive absorption of NOx can be inhibited. Also, since the weight ratio of the NOx purification component to the NOx absorption component is 20 or below (more preferably, 15 or below), the absorbed NOx can be sufficiently purified.

(5) The invention according to claim 5 provides the NOx reduction catalyst as set forth in one of claims 1 to 4, for use in purification of exhaust gas of an automobile.

The NOx reduction catalyst of the present invention is capable of purifying NOx in exhaust gas.

(6) The invention according to claim 6 provides a NOx reduction catalyst system including the NOx reduction catalyst as set forth in one of claims 1 to 5, and a rich state achieving device that brings the processing gas supplied to the NOx reduction catalyst into a rich state.

The NOx reduction catalyst system of the present invention can reduce NOx using the ammonia source added by the ammonia source addition device. That is, the NOx reduction catalyst system of the present invention can cause NOx and ammonia to react on each other under the presence of the NOx purification component by a so-called SCR method, thereby to reduce NOx to nitrogen.

The ammonia source broadly corresponds to a substance that generates ammonia as a consequence. Examples of the ammonia source are ammonia, a urea aqueous solution, an ammonia compound, and others.

The ammonia source addition device broadly corresponds to a device that can add an ammonia source to processing gas. An example of the ammonia source addition device is an injector or the like, in case that the ammonia source is liquid.

The ammonia source addition device, for example, can stop the supply of the ammonia source or reduce the amount of supply under the conditions that NOx reduction reaction by the NOx purification component hardly occurs, for example, when the temperatures of processing gas and the NOx reduction catalyst are low (200°C or below, for example). In this manner, the amount of the ammonia source used can be suppressed. Furthermore, the amount of ammonia can be reduced which remains in processing gas without reacting.

An example of the rich state achieving device is a device which adds fuel (light oil, gasoline, and others) to processing gas. Other examples of the rich state achieving device in case that the processing gas is an exhaust gas of an internal combustion engine are a device that changes driving conditions of the internal combustion engine to change the composition of the exhaust gas, and a device that utilizes the exhaust gas under rich condition by post injection, HC addition to an exhaust system, rich spike and sulfur regeneration.

The rich state indicates a state of excessive fuel when compared to a stoichiometric state. For example, the air-fuel ratio is 14.6 or less when the processing gas is an exhaust gas of a gasoline engine, and 14.5 or less when the processing gas is an exhaust gas of a diesel engine.

There is no limitation to a time period for which the rich state continues. The time period may be a spike-like time of about 0.1 sec, or a long time like several hours. The rich state and other state patterns may be, as shown in FIGS. 6 and 7, for example, periodically switched between sections of a rich state and other states at a certain timing, and the air-fuel ratios in individual sections may be made constant. Or, as shown in FIG. 8, the air-fuel ratio may be periodically changed little by little (for example, according to a sign curve) to generate a rich state.

(7) The invention according to claim 7 provides a NOx reduction method that uses the NOx reduction catalyst of one of claims 1 to 5 to reduce NOx contained in the processing gas .

The NOx reduction method of the present invention is capable of purifying NOx over a wide temperature range from low to high temperature, and highly useful.

BRIEF DESCRIPTION OF THE DRAWINGS

[FIG. 1] is a cross sectional view showing a structure of a NOx reduction catalyst 5.
[FIG. 2] is a cross sectional view showing a structure of a NOx reduction catalyst 5.
[FIG. 3] is a cross sectional view showing a structure of a NOx reduction catalyst 5.
[FIG. 4] is a block diagram showing a structure of an experiment system.

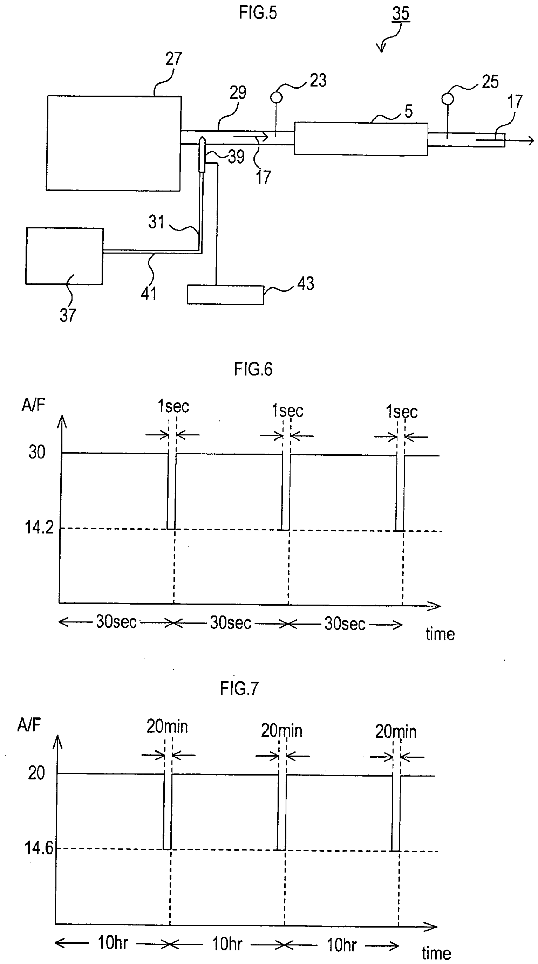

[FIG. 5] is a block diagram showing a structure of an experiment system.
[FIG. 6] is an explanatory diagram showing a composition transition of an exhaust gas 17.
[FIG. 7] is an explanatory diagram showing a composition transition of the exhaust gas 17.

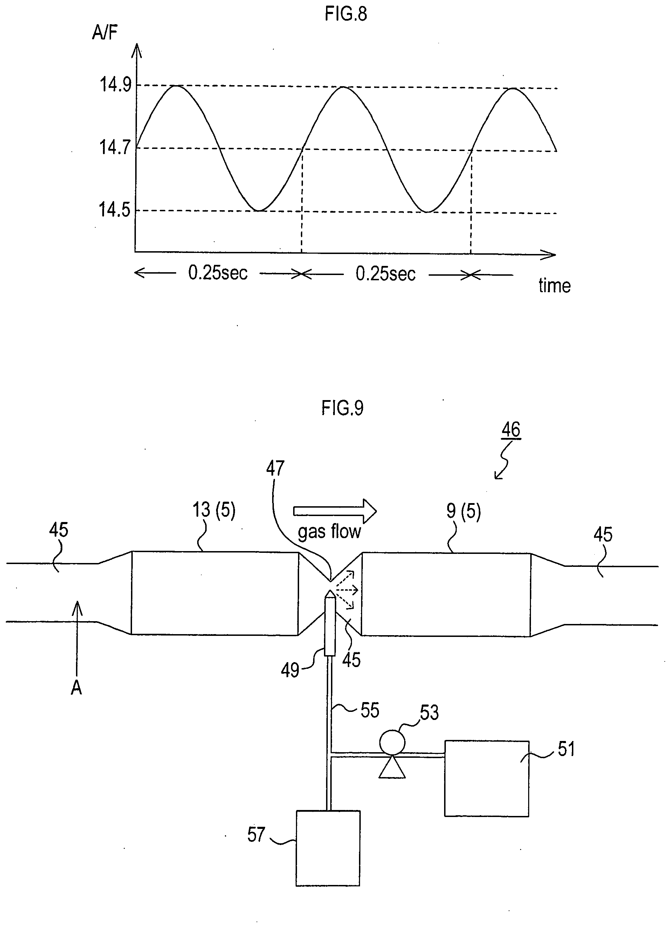

[FIG. 8] is an explanatory diagram showing a composition transition of the exhaust gas 17.
[FIG. 9] is a block diagram showing a structure of an experiment system.

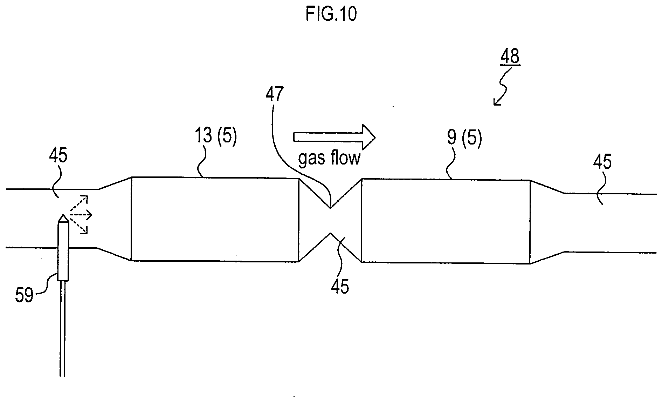

[FIG. 10] is a block diagram showing a structure of an experiment system.

EXPLANATION OF REFERENCE NUMERALS

1, 7...ceramic honeycomb
3...catalyst layer
3a...lower portion
3b...upper portion
5...NOx reduction catalyst
9...downstream catalyst layer
11...downstream catalyst
13...upstream catalyst layer
15...upstream catalyst
17...exhaust gas
19...engine
21...injector
23, 25...exhaust gas analyzer
27...diesel engine
29...exhaust pipe
30...light oil
31...light oil addition device
33...control device

BEST MODE FOR CARRYING OUT THE INVENTION

The present invention will be explained based on embodiments.

Embodiment 1 (not according to the invention)

Below listed components were mixed, stirred for an hour, and, thereafter, wet-milled for an hour using a ball mill.
zeolite B (having a silica/alumina ratio of 35)

manufactured by Tosoh Corporation: 100 parts by weight
ferric nitrate: 25 parts by weight
Y alumina: 20 parts by weight

Ba acetate: 25 parts by weight
ion-exchanged water: 200 parts by weight

Thereafter, 10 parts by weight (converted as $Al_2O_3$) of alumina sol (AS200 manufactured by Nissan Chemical Industries, Ltd.) as a binder was further added to prepare a slurry.

The above slurry was applied to a ceramic honeycomb 1 (having a density of 300 cells/in$^2$, a wall thickness of 8 mil, a size of $\varphi$190.5$\times$L76 mm, a capacity of 2.2 L) manufactured by NGK Insulators, Ltd. After excess slurry was blown off, the ceramic honeycomb 1 was dried at 200°C for an hour, and calcined at 500°C for an hour, thereby to manufacture a NOx reduction catalyst 5 provided with a catalyst layer 3 as shown in FIG. 1. Respective amounts of Fe and Ba in the catalyst layer 3 are 0.15 mol/L and 0.1 mol/L.

Table 1 shows compositions of the catalyst layers of the NOx reduction catalysts manufactured in the Embodiment 1, and later-explained Embodiments 2 to 10 and Comparative Embodiments 1 to 5.

[Table 1]

| | NOx purification component | | NOx absorption component | | Other inorganic oxide | | Remarks |
|---|---|---|---|---|---|---|---|
| | Type | Amount (mol/L) | Type | Amount (mol/L) | | | |
| Embodiment 1 | Fe | 0.15 | Ba | 0.1 | zeolite β | γ alumina | |
| Embodiment 2 | Fe | 0.15 | Ba | 0.1 | ZSM5 | γ alumina | |
| Embodiment 3 | V | 0.2 | Ba | 0.1 | zeolite β | γ alumina | |
| Embodiment 4 | Ce | 0.2 | Ba | 0.1 | zeolite β | γ alumina | |
| Embodiment 5 | La | 0.2 | Ba | 0.1 | zeolite β | γ alumina | |
| Embodiment 6 | Fe | 0.15 | K | 0.1 | zeolite β | γ alumina | |
| Embodiment 7 | Fe | 0.15 | Ce | 0.2 | zeolite β | γ alumina | |
| | | | Pd | 1※ | | | |
| | | | K | 0.1 | | | |
| | | | Li | 0.1 | | | |
| Embodiment 8 | Fe | 0.15 | Nd | 0.1 | zeolite β | γ alumina | |
| Embodiment 9 | Fe | 0.15 | Ba | 0.1 | zeolite β | γ alumina | upper layer: Fe, lower layer: Ba |
| | | | Pt | 2※ | | | |
| | | | Rh | 0.5※ | | | |
| Embodiment 10 | Fe | 0.15 | Ba | 0.1 | zeolite β | γ alumina | upstream: Ba, downstream: Fe |
| | | | Pt | 2※ | | | |
| | | | Rh | 0.5※ | | | |
| Comp. Ex. 1 | V | 0.2 | - | - | TiO2 | WO3 | V2O5/TiO2-WO3 |
| Comp. Ex. 2 | Fe | 0.15 | - | - | zeolite β | alumina | Only NOx purification component |
| Comp. Ex. 3 | Fe | 0.15 | - | - | zeolite β | - | Only NOx purification component |

(continued)

| | NOx purification component | | NOx absorption component | | Other inorganic oxide | | Remarks |
|---|---|---|---|---|---|---|---|
| | Type | Amount (mol/L) | Type | Amount (mol/L) | | | |
| Comp. Ex. 4 | - | - | Ba | 0.1 | zeolite β | γ alumina | Only NOx absorption component |
| Comp. Ex. 5 | Fe | 0.15 | - | - | zeolite β | γ alumina | Only NOx purification component |
| ※ The unit of the amount of Pt, Rh and Pd in Embodiments 7, 9 and 10 is g/L. | | | | | | | |

Embodiment 2 (not according to the invention)

The NOx reduction catalyst 5 was manufactured in the same manner as in the Embodiment 1, except that, in place of zeolite β, the same amount of ZSM5 (having a silica/alumina ratio of 30) manufactured by Tosoh Corporation was employed.

Embodiment 3

The NOx reduction catalyst 5 was manufactured in the same manner as in the Embodiment 1, except that an aqueous oxalic acid solution containing V oxide was employed in place of ferric nitrate. The amount of the aqueous oxalic acid solution of V oxide is an amount containing 0.2 mol/L of V in the catalyst layer 3.

Embodiment 4

The NOx reduction catalyst 5 was manufactured in the same manner as in the Embodiment 1, except that Ce nitrate was employed in place of ferric nitrate. The amount of Ce nitrate is an amount containing 0.2 mol/L of Ce in the catalyst layer 3.

Embodiment 5

The NOx reduction catalyst 5 was manufactured in the same manner as in the Embodiment 1, except that La nitrate was employed in place of ferric nitrate. The amount of La nitrate is an amount containing 0.2 mol/L of La in the catalyst layer 3.

Embodiment 6 (not according to the invention)

The NOx reduction catalyst 5 was manufactured in the same manner as in the Embodiment 1, except that K acetate was employed in place of Ba acetate. The amount of K acetate is an amount containing 0.1 mol/L of K in the catalyst layer 3.

Embodiment 7 (not according to the invention)

The NOx reduction catalyst 5 was manufactured in the same manner as in the Embodiment 1, except that K acetate, Li acetate, Ce nitrate and Pd nitrate were employed in place of Ba acetate. The amount of Ce nitrate is an amount containing 0.2 mol/L of Ce and the amount of Pd nitrate is an amount containing 1 g/L of Pd, in the catalyst layer 3. The respective amounts of K acetate and Li acetate are an amount containing 0.1 mol/L of K and an amount containing 0.1 mol/L of Li, in the catalyst layer 3.

Embodiment 8 (not according to the invention)

The NOx reduction catalyst was manufactured in the same manner as in the Embodiment 1, except that Nd nitrate was employed in place of Ba acetate. The amount of Nd acetate is an amount containing 0.1 mol/L of Nd in the catalyst layer 3.

Embodiment 9 (not according to the invention)

Below listed components were mixed, stirred for an hour, and, thereafter, wet-milled for an hour using a ball mill. zeolite 6 (having a silica/alumina ratio of 35)

> manufactured by Tosoh Corporation: 100 parts by weight
> ferric nitrate: 25 parts by weight
> ion-exchanged water: 250 parts by weight

Thereafter, 5 parts by weight (converted as $Al_2O_3$) of alumina sol (AS200 manufactured by Nissan Chemical Industries, Ltd.) as a binder was further added to prepare a slurry A.
Moreover, below listed components were mixed, stirred for an hour, and, thereafter, wet-milled for an hour using a ball mill.
> $\gamma$ alumina: 20 parts by weight
> barium acetate: 25 parts by weight
> ion-exchanged water: 50 parts by weight

Thereafter, 3 parts by weight (converted as $Al_2O_3$) of alumina sol (AS200 manufactured by Nissan Chemical Industries, Ltd.) as a binder was further added to prepare a slurry B.
The slurry B was firstly applied to a ceramic honeycomb 1 similar to that of the Embodiment 1. Thereafter, the ceramic honeycomb 1 was dried at 250°C for an hour, soaked in an aqueous dinitrodiamino Pt solution and an aqueous Rh chloride solution to absorb Pt and Rh, and dried at 350°C, to form a lower layer portion 3a, as shown in FIG. 2. The carrying amounts of Pt and Rh are 2 g/L and 0.5 g/L, respectively. Subsequently, the slurry A was applied to form an upper layer portion 3b. The ceramic honeycomb 1 was calcined at 500°C for an hour thereby to manufacture the NOx reduction catalyst 5 having a two-layer structure with the catalyst layer 3 composed of the lower layer portion 3a and the upper layer portion 3b.
In the catalyst layer 3, only the upper layer portion 3a contains Fe, and only the lower layer portion 3b contains Ba. The amounts of Fe and Ba in the whole catalyst layer 3 are 0.15 mol/L and 0.1 mol/L, respectively.

Embodiment 10 (not according to the invention)

Two substrates are prepared which respectively have half the catalyst length and the capacity of the ceramic honeycomb 1 used in the Embodiment 1, that is, ceramic honeycombs 7 (having a density of 300 cells/in$^2$, a wall thickness of 8 mil, a size of $\varphi$190.5×L38 mm, a capacity of 1.1 L) manufactured by NGK Insulators, Ltd.
The slurry A was applied to one of the ceramic honeycombs 7. The ceramic honeycomb 7 was dried and calcined thereby to manufacture a downstream catalyst 11 provided with a downstream catalyst layer 9, as shown in FIG. 3. Drying and calcination are conditioned the same as in the Embodiment 1. An amount of Fe in the downstream catalyst layer 9 was 0.15 mol/L.
Also, the slurry B was applied to the other of the ceramic honeycombs 7. Noble metals were carried in the same manner as in the Embodiment 9. The ceramic honeycomb 7 was dried and calcined thereby to manufacture an upstream catalyst 15 provided with an upstream catalyst layer 13, as shown in FIG. 3. Drying and calcination are conditioned the same as in the Embodiment 1. An amount of Ba in the upstream catalyst layer 13 was 0.1 mol/L. A carrying amount of Pt and Rh are 2 g/L and 0.5 g/L, respectively.
With respect to a flow of exhaust gas (processing gas), the upstream catalyst 15 and the downstream catalyst 11 were disposed in series such that the upstream catalyst 15 is located on the upstream side and the downstream catalyst 11 is located on the downstream side, thereby to form the NOx reduction catalyst 5 composed of these two catalysts.

(Comparative Example 1)

A $V_2O_5/TiO_2$-$WO_3$ catalyst used as a stationary denitration catalyst was manufactured as below.
Below listed components were mixed, stirred and crushed for an hour by a ball mill to prepare a slurry. titanium oxide (specific surface area 82 m$^2$/g)

> containing 5 wt% of tungsten oxide: 100 parts by weight titanium oxide sol manufactured by Ishihara Sangyo Kaisha Ltd.: 20 parts by weight (converted as $TiO_2$)

ion-exchanged water: 100 parts by weight

The above slurry was applied to coat a ceramic honeycomb similar to that of the Embodiment 1 to form a catalyst layer, and further dried and calcined in the same manner as in the Embodiment 1. A coating amount of the catalyst layer is 120 g.

Subsequently, the above catalyst layer was soaked into a V-containing aqueous solution which was made by dissolving $V_2O_5$ into an aqueous oxalic acid solution of 80°C. After taken out from the V-containing aqueous solution, extra water droplets were blown off. Thereafter, the catalyst layer was dried at 100°C and calcined at 500°C for an hour thereby to form a V oxide on the surface of the catalyst layer. A carrying amount of V on the catalyst layer is 0.2 mol/L.

(Comparative Example 2)

Below listed components were mixed to prepare a slurry.

zeolite $\beta$ ion-exchanged by Fe: 100 parts by weight
alumina sol: 10 parts by weight (converted as alumina)
ion-exchanged water: 50 parts by weight

The above slurry was applied to coat a ceramic honeycomb similar to that of the Embodiment 1, dried and calcined to manufacture a catalyst.

(Comparative Example 3)

A catalyst was manufactured in the same manner as in the Embodiment 1 except that $\gamma$ alumina and Ba acetate were not mixed into the slurry.

(Comparative Example 4)

A catalyst was manufactured in the same manner as in the Embodiment 1 except that Fe nitrate was not mixed into the slurry.

(Comparative Example 5)

A catalyst was manufactured in the same manner as in the Embodiment 9 except that the slurry B was not applied. That is, in the Comparative Example 5, the slurry A was directly applied to the ceramic honeycomb to form a catalyst layer, dried and calcined thereby to manufacture a catalyst provided with only a catalyst layer made from the slurry A.

Embodiment 11

a) Durability of catalyst

By means of an electric furnace, a 800°C, 10-hour hydrothermal durability test was performed in an atmosphere containing 10 vol% of water vapor to the NOx reduction catalysts 5 manufactured in the Embodiments 1 to 10 and the catalysts manufactured in the Comparative Examples 1 to 5.

b) Preparation of experimental system

After the durability test of the above a), an experimental system was created which includes the catalyst 5 (the NOx reduction catalysts 5 manufactured in the Embodiments 1 to 10 or the catalysts manufactured in the Comparative Examples 1 to 5), an engine with turbointercooler 19 of 6.6 L displacement which supplies exhaust gas 17 to the catalyst 5, an injector 21 (ammonia source addition device) that sprays a 30% urea aqueous solution 18 to the exhaust gas 17 in the upstream of the catalyst 5, an exhaust gas analyzer 23 that measures NOx concentration in the exhaust gas 17 in the upstream of the catalyst 5, and an exhaust gas analyzer 25 that measures NOx concentration in the exhaust gas 17 in the downstream of the catalyst 5, as shown in FIG. 4. Both of the exhaust gas analyzers 23 and 25 are MEXA7000 manufactured by Horiba, Ltd.

c) Evaluation of NOx purification performance

In the experimental system of the above b), the engine 9 was driven, and the exhaust gas 17 was supplied to the catalyst 5. When the temperature of the exhaust gas 17 is 200°C or above, the 30% urea aqueous solution 18 was sprayed to the exhaust gas 17 by the injector 21. The main setting conditions were as follows.
fuel of engine 9: commercially available light oil having 10 ppm or less of S (sulfur)
revolution of engine 9: 1600 rpm, constant
exhaust gas processing amount of catalyst 5: 30,000/hour
additive amount of 30% urea aqueous solution: same amount of mol as NOx amount in exhaust gas 17 converted as ammonia (Adding is not performed when the temperature of the exhaust gas 17 is 200°C or below.)

The temperature of the exhaust gas 17 was adjusted by changing a load of the engine 9, and firstly set to 150°C constant. When the temperature of the exhaust gas 17 reached 150°C, exhaust gas 17 was left alone for three minutes until the state of the exhaust gas 17 is stabled. Then, a NOx concentration C1 (ppm) in the exhaust gas 17 before entering the catalyst 5 was measured by the exhaust gas analyzer 23. A NOx concentration C2 (ppm) in the exhaust gas 17 which passed through the catalyst 5 was also measured by the exhaust gas analyzer 25.
Subsequently, the temperature of the exhaust gas 17 was set to 250°C constant. In the same manner as above, the exhaust gas 17 was left alone for three minutes after the temperature of the exhaust gas 17 reached 250°C, and the NOx concentration C1 (ppm) in the exhaust gas 17 before entering the catalyst 5 and the NOx concentration C2 (ppm) in the exhaust gas 17 which passed through the catalyst 5 were measured.
Moreover, the temperature of the exhaust gas 17 was set to 350°C constant. In the same manner as above, the exhaust gas 17 was left alone for three minutes after the temperature of the exhaust gas 17 reached 350°C, and the NOx concentration C1 (ppm) in the exhaust gas 17 before entering the catalyst 5 and the NOx concentration C2 (ppm) in the exhaust gas 17 which passed through the catalyst 5 were measured. Thereafter, a NOx purification rate (%) was calculated according to an equation (1) below in respective cases where the exhaust gas temperature 17 is 150°C, 250°C, and 350°C. The results are shown in Table 2.

$$\text{Equation (1): NOx purification rate (\%)} = ((C1 - C2) / C1) \times 100$$

[Table 2]

|  | NOx purification rate (%) | | |
|---|---|---|---|
|  | 150°C | 250°C | 350°C |
| Embodiment 1 | 69 | 83 | 72 |
| Embodiment 2 | 71 | 87 | 75 |
| Embodiment 3 | 65 | 91 | 77 |
| Embodiment 4 | 60 | 91 | 79 |
| Embodiment 5 | 63 | 89 | 81 |
| Embodiment 6 | 65 | 85 | 79 |
| Embodiment 7 | 65 | 87 | 77 |
| Embodiment 8 | 69 | 88 | 76 |
| Embodiment 9 | 72 | 84 | 77 |
| Embodiment 10 | 81 | 83 | 75 |
| Comp. Ex. 1 | 2 | 43 | 76 |
| Comp. Ex. 2 | 1 | 46 | 78 |
| Comp. Ex. 3 | 3 | 51 | 73 |

(continued)

|  | NOx purification rate (%) | | |
|---|---|---|---|
|  | 150°C | 250°C | 350°C |
| Comp. Ex. 4 | 54 | 2 | 3 |
| Comp. Ex. 5 | 0 | 28 | 70 |

As shown in the above Table 2, the NOx reduction catalysts 5 manufactured in the Embodiments 1 to 10 exhibited very high NOx purification rates at any of the temperatures of the exhaust gas 17. In contrast, the catalysts of the Comparative Examples 1 to 5 exhibited very low NOx purification rates when the temperature of the exhaust gas 17 was 150°C and 250°C.

Embodiment 12

a) In the same manner as in the a) of the Embodiment 11, a 800°C, 10-hour hydrothermal durability test was performed in an atmosphere containing 10 vol% of water vapor to the NOx reduction catalysts 5 manufactured in the Embodiments 1 to 10 and the catalysts manufactured in the Comparative Examples 1 to 5.
b) Structure of experimental system (catalyst system)
As shown in FIG. 5, an experimental system 35 was created which includes the catalyst 5 (the NOx reduction catalysts 5 manufactured in the Embodiments 1 to 10 or the catalysts manufactured in the Comparative Examples 1 to 5), a diesel engine 27 of 2 L displacement which supplies exhaust gas 17 to the catalyst 5, an exhaust pipe 29 extending from the diesel engine 27 to the catalyst 5, a light oil addition device 31 that adds light oil 30 to the exhaust pipe 29, the exhaust gas analyzer 23 that measures NOx concentration in the exhaust gas 17 in the upstream of the catalyst 5, and the exhaust gas analyzer 25 that measures NOx concentration in the exhaust gas 17 in the downstream of the catalyst 5. The light oil addition device 31 includes a light oil tank 37 that stores light oil, an injector 39 that injects light oil into the exhaust pipe 29, a light oil feeding pipe 41 that feeds the light oil taken out from the light oil tank to the injector 39, and a controller 43 that controls an amount of the injection of the light oil in the injector 39.
c) Evaluation of NOx purification performance

In the experimental system of the above b), the diesel engine 27 was driven, and the exhaust gas 17 was supplied to the catalyst 5. The revolution of the diesel engine 27 was set to 2100 rpm. The temperature at the entrance of the catalyst 5 was controlled to 250°C.
With respect to the composition of the exhaust gas 17, the A/F ratio was basically set to 30 as shown in FIG. 6. However, light oil was intermittently added to the exhaust gas 17 by the light oil addition device 31 so that the state in which the A/F ratio is 14.2 may appear for one second at an interval of 30 seconds.
When the temperature of the exhaust gas 17 reached 250°C, the exhaust gas 17 was left alone for three minutes until the state of the exhaust gas 17 is stabled. Then, the NOx concentration C1 (ppm) in the exhaust gas 17 before entering the catalyst 5 was measured by the exhaust gas analyzer 23. The NOx concentration C2 (ppm) in the exhaust gas 17 which passed through the catalyst 5 was also measured by the exhaust gas analyzer 25.
The NOx purification rate (%) was calculated according to the equation (1) above. The results are shown in Table 3.

[Table 3]

|  | NOx purification rate (%) |
|---|---|
|  | 250°C |
| Embodiment 1 | 81 |
| Embodiment 2 | 82 |
| Embodiment 3 | 80 |
| Embodiment 4 | 84 |
| Embodiment 5 | 87 |

(continued)

|  | NOx purification rate (%) |
|---|---|
|  | 250°C |
| Embodiment 6 | 81 |
| Embodiment 7 | 88 |
| Embodiment 8 | 81 |
| Embodiment 9 | 81 |
| Embodiment 10 | 91 |
| Comp. Ex. 1 | 3 |
| Comp. Ex. 2 | 4 |
| Comp. Ex. 3 | 5 |
| Comp. Ex. 4 | 5 |
| Comp. Ex. 5 | 1 |

As shown in the above Table 3, the NOx reduction catalysts 5 manufactured in the Embodiments 1 to 10 exhibited very high NOx purification rates. In contrast, the catalysts of the Comparative Examples 1 to 5 exhibited very low NOx purification rates.

Embodiment 13

A description on the structure of a catalyst system 46 will be given by way of FIG. 9. In the catalyst system 46, the NOx reduction catalyst 5 described in the Embodiment 10 is attached to the inside of an exhaust pipe 45. The upstream catalyst 15 was attached to the upstream side of the exhaust pipe 45, and the downstream catalyst 11 was attached to the downstream side of the exhaust pipe 45. The exhaust pipe 45 has a narrow section 47 having a small cross section between a part where the upstream catalyst 15 was attached and a part where the downstream catalyst 11 was attached. Also, the upstream side of the upstream catalyst 15 and the downstream side of the downstream catalyst 11 of the exhaust pipe 45 have a smaller cross section than the parts where the upstream catalyst 15 and the downstream catalyst 11 were attached.

In the catalyst system 46, an injector 49 that injects a urea aqueous solution is attached to the above narrow section 47. By means of the injector 49, the urea aqueous solution can be added to the exhaust gas supplied to the downstream catalyst 11. The urea aqueous solution stored in a urea aqueous solution tank 51 is supplied to the injector 49 through a duct 55 using a pump 53. The amount of the urea aqueous solution injected from the injector 49 is controlled by a controller 57.

If the NOx reduction catalyst attached to the exhaust pipe 45 is an integrated type without being separated into the upstream catalyst and the downstream catalyst as the NOx reduction catalysts of the Embodiments 1 to 9, the injector 49 that supplies the urea aqueous solution may be provided on the upstream side of the NOx reduction catalyst (e.g., position A in FIG. 9).

Embodiment 14

A description is given on a structure of a catalyst system 46 by way of FIG. 10. In the catalyst system 48, the NOx reduction catalyst 5 described in the Embodiment 10 is attached to the inside of the exhaust pipe 45. The upstream catalyst 15 was attached to the upstream side of the exhaust pipe 45, and the downstream catalyst 11 was attached to the downstream side of the exhaust pipe 45. The exhaust pipe 45 has a narrow section 47 having a small cross section between a part where the upstream catalyst 15 was attached and a part where the downstream catalyst 11 was attached. Also, the upstream side of the upstream catalyst 15 and the downstream side of the downstream catalyst 11 of the exhaust pipe 45 have a smaller cross section than the parts where the upstream catalyst 15 and the downstream catalyst 11 were attached.

In the catalyst system 48, an injector 59 that injects light oil is attached to an upstream position of the upstream catalyst 15 of the exhaust pipe 45. By means of the injector 59, the light oil can be added to the exhaust gas supplied to the upstream catalyst 15, thereby bringing the exhaust gas into a rich state.

It is to be understood that the present invention should not be limited to the above described embodiments, but may be practiced in various forms within the scope not departing from the present invention.

For instance, the weight ratio of the NOx absorption component to the NOx purification component in the entire NOx reduction catalyst 5 is not limited to the values in the Embodiments. The weight ratio may be in a range of 1:0.1 to 20. In this case as well, the same effects can be obtained.

The oxide in the NOx reduction catalyst 5 of the Embodiments may be $TiO_2$ or $ZrO_2$. In this case as well, the same effects can be obtained.

In the Embodiment 10, a single ceramic honeycomb 1 may be partitioned into an upstream portion and a downstream portion. The slurry B may be applied to the upstream portion and the slurry A may be applied to the downstream portion. In this manner, the upstream catalyst layer 13 and the downstream catalyst layer 9 can be formed on the surface of the single ceramic honeycomb 1.

**Claims**

1. A NOx reduction catalyst system comprising:

   a NOx reduction catalyst that reduces NOx in processing gas, comprising:

       a catalyst substrate containing an oxide;
       a NOx absorption component; and
       a NOx purification component,

   and the NOx absorption component is Ba, the NOx purification component is one or more of those selected from a group consisting of V, Ce and La, and the oxide is in combination $\gamma$-$Al_2O_3$ and zeolite $\beta$; and
   an ammonia source addition device that adds an ammonia source to the processing gas supplied to the NOx reduction catalyst.

2. The NOx reduction catalyst system according to claim 1, wherein the NOx reduction catalyst has a layered structure including
   an A-layer where the NOx absorption component is unevenly distributed, and
   a B-layer where the NOx purification component is unevenly distributed.

3. The NOx reduction catalyst system according to claim 1, wherein the NOx reduction catalyst has a structure in which an upstream portion where the NOx absorption component is unevenly distributed and a downstream portion where the NOx purification component is unevenly distributed are disposed in series along a flowing direction of the processing gas.

4. The NOx reduction catalyst system according to one of claims 1 to 3,
   wherein a weight ratio of the NOx absorption component to the NOx purification component in the entire NOx reduction catalyst is in a range of 1:0.1 to 20.

5. The NOx reduction catalyst according to one of claims 1 to 4, for use in purification of exhaust gas of an automobile.

6. A NOx reduction catalyst system comprising:

   the NOx reduction catalyst of one of claims 1 to 5; and
   a rich state achieving device that brings the processing gas supplied to the NOx reduction catalyst into a rich state.

7. A NOx reduction catalyst method that uses the NOx reduction catalyst of one of claims 1 to 5 to reduce NOx contained in the processing gas.

**Patentansprüche**

1. NOx-Reduktionskatalysatorsystem, welches umfasst:

   einen NOx-Reduktionskatalysator, welcher NOx in Prozessgas reduziert, welcher umfasst:

ein Katalysatorsubstrat, welches ein Oxid beinhaltet;
eine NOx-Absorptionskomponente; und
eine NOx-Reinigungskomponente,

wobei die NOx-Absorptionskomponente Ba ist, die NOx-Reinigungskomponente eine oder mehrere ist, ausgewählt aus der Gruppe bestehend aus V, Ce und La, und das Oxid in Kombination $\gamma$-Al$_2$O$_3$ und Zeolith $\beta$ ist; und eine Zufügungsvorrichtung für eine Ammoniakquelle, welche eine Ammoniakquelle zu dem Prozessgas zufügt, welches zu dem NOx-Reduktionskatalysator zugeführt wird.

2. NOx-Reduktionskatalysator nach Anspruch 1, wobei der NOx Reduktionskatalysator eine Schichtstruktur aufweist, welche eine A-Schicht, in welcher die NOx-Absorptionskomponente ungleichmäßig verteilt ist, und eine B-Schicht, in welcher die NOx-Reinigungskomponente ungleichmäßig verteilt ist, einschließt.

3. NOx-Reduktionskatalysatorsystem nach Anspruch 1, wobei der NOx-Reduktionskatalysator eine Struktur aufweist, in der ein stromaufwärtiger Abschnitt, in dem die NOx-Absorptionskomponente ungleichmäßig verteilt ist, und ein stromabwärtiger Abschnitt, in dem die NOx-Reinigungskomponente ungleichmäßig verteilt ist, in Reihe entlang einer Strömungsrichtung des Prozessgases angeordnet sind.

4. NOx-Reduktionskatalysatorsystem nach einem der Ansprüche 1 bis 3, wobei ein Gewichtsverhältnis zwischen der NOx-Absorptionskomponente und der NOx-Reinigungskomponente in dem gesamten NOx-Reduktionskatalysatorsystem in einem Bereich von 1:0,1 bis 20 ist.

5. NOx-Reduktionskatalysator nach einem der Ansprüche 1 bis 4 zur Verwendung zur Reinigung von Abgas eines Automobils.

6. NOx-Reduktionskatalysatorsystem, welches umfasst:

den NOx-Reduktionskatalysator nach einem der Ansprüche 1 bis 5, und
eine Vorrichtung zum Erlangen eines angereicherten Zustandes, welche das Prozessgas, welches dem NOx-Reduktionskatalysator zugeführt wird, in einen angereicherten Zustand bringt.

7. Verfahren zur NOx-Reduktionskatalyse, welches den NOx-Reduktionskatalysator nach einem der Ansprüche 1 bis 5 zur Reduktion von NOx, welches im Prozessgas enthalten ist, verwendet.

**Revendications**

1. Système catalytique de réduction des NOx comprenant :

un catalyseur de réduction des NOx qui réduit les NOx dans un gaz de traitement, comprenant :

un substrat du catalyseur contenant un oxyde ;
un composant d'absorption des NOx ; et
un composant de purification des NOx,

et où le composant d'absorption des NOx est Ba, le composant de purification des NOx est un ou plusieurs de ceux sélectionnés dans un groupe consistant en V, Ce et La et l'oxyde est dans une combinaison $\gamma$-Al$_2$O$_3$ et zéolite $\beta$ ; et un dispositif d'addition d'une source d'ammoniac qui ajoute une source d'ammoniac au gaz de traitement fourni au catalyseur de réduction des NOx.

2. Système catalytique de réduction des NOx selon la revendication 1, où le catalyseur de réduction des NOx a une structure en couches incluant
une couche A dans laquelle le composant d'absorption des NOx est distribué d'une manière irrégulière et
une couche B dans laquelle le composant de purification des NOx est distribué d'une manière irrégulière.

3. Système catalytique de réduction des NOx selon la revendication 1, où le catalyseur de réduction des NOx a une structure comportant une partie d'amont dans laquelle le composant d'absorption des NOx est distribué d'une manière irrégulière et une partie d'aval dans laquelle le composant de purification des NOx est distribué d'une manière irrégulière disposées en série le long d'une direction de l'écoulement du gaz de traitement.

4. Système catalytique de réduction des NOx selon l'une des revendications 1 à 3, où un rapport en poids composant d'absorption des NOx/composant de purification des NOx dans l'ensemble du catalyseur de réduction des NOx est dans une plage de 1:0,1 à 20.

5. Catalyseur de réduction des NOx selon l'une des revendications 1 à 4 pour une utilisation dans la purification des gaz d'échappement d'une automobile.

6. Système catalytique de réduction des NOx comprenant :

le catalyseur de réduction des NOx de l'une des revendications 1 à 5 ; et
un dispositif permettant d'atteindre un état riche qui amène le gaz de traitement fourni au catalyseur de réduction des NOx à un état riche.

7. Procédé de réduction catalytique des NOx qui utilise le catalyseur de réduction des NOx de l'une des revendications 1 à 5 pour réduire les NOx contenus dans le gaz de traitement.

FIG.1

FIG.2

FIG.3

gas flow

FIG.4

FIG.5

FIG.6

FIG.7

FIG.8

FIG.9

FIG.10

**EP 2 025 401 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005177570 A
- US 5676912 A
- WO 2005099873 A
- JP 2003038937 A
- JP 10296085 A
- WO 2004076829 A1
- JP 2006110485 A
- WO 2004002611 A1